# FASCICULE DE BREVET EUROPEEN

(11) **EP 3 581 298 B1**
(45) Date de publication et mention de la délivrance du brevet: **13.10.2021**
(21) Numéro de dépôt: 19177766.3
(22) Date de dépôt: 31.05.2019
(51) Int. Cl.: B22F 5/00, B22F 3/24, B22F 10/28, B22F 10/66, F01D 9/04, F01D 15/08, F02K 9/48, B33Y 40/20, B23H 9/10, B33Y 10/00

(54) **PROCÉDÉ DE FABRICATION D'UNE TURBINE, EN PARTICULIER POUR TURBOPOMPE**
HERSTELLUNGSVERFAHREN EINER TURBINE, INSBESONDERE FÜR TURBOPUMPE
METHOD OF MANUFACTURING A TURBINE, IN PARTICULAR FOR A TURBO PUMP

(30) Priorité: 12.06.2018 FR 1855119
(43) Date de publication de la demande: 18.12.2019
(73) Titulaire: ArianeGroup SAS, 75015 Paris (FR)
(72) Inventeur: PENIN, Loïc, 27200 VERNON (FR); BOUFFLERT, Sébastien, 27400 LOUVIERS (FR)
(74) Mandataire: Cabinet Beau de Loménie

(56) Documents cités:
- EP-A1- 1 377 404
- WO-A1-2016/142631
- US-A1- 2018 079 038
- XP055374490

## Description

### DOMAINE DE L'INVENTION

Le présent exposé concerne un procédé de fabrication d'une turbine, en particulier pour turbopompe.

### ARRIÈRE-PLAN TECHNOLOGIQUE

La FIG 1A est une vue en coupe longitudinale d'une turbopompe 101 décrite dans le document FR 2 964 425.

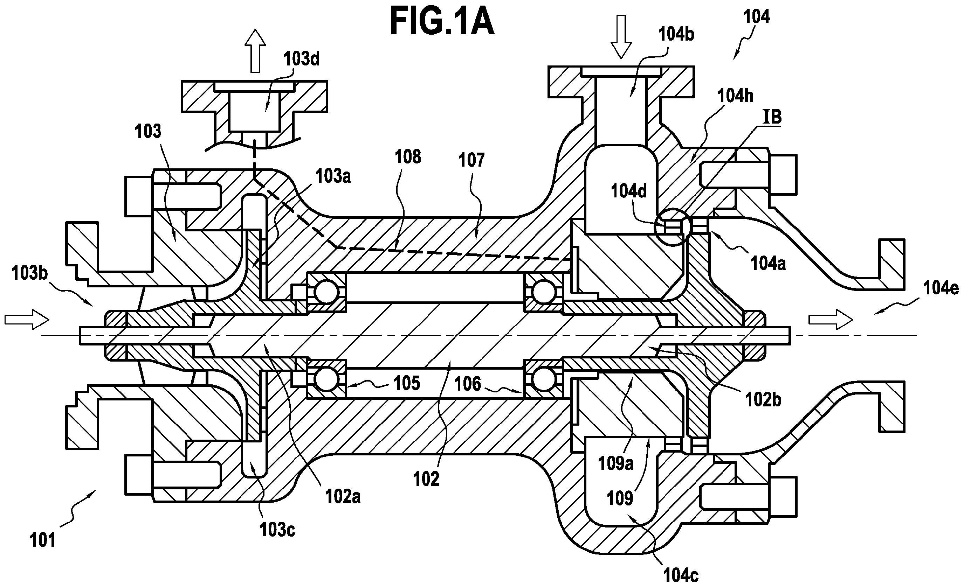

Dans la turbopompe 101 illustrée sur la FIG 1A, un arbre commun 102 relie la pompe centrifuge 103 à la turbine axiale 104. Une première extrémité 102a de l'arbre 102 est solidaire d'un rotor 103a de la pompe 103, et une deuxième extrémité 102b de l'arbre 102, opposée à ladite première extrémité 102a, est solidaire d'un rotor 104a de la turbine 104. Ainsi, la rotation du rotor 104a de la turbine 104, propulsée par l'expansion de gaz entrant dans la turbine par un conduit radial d'admission 104b, un tore d'admission 104c et un distributeur 104d et sortant par un conduit axial d'échappement 104e entraîne la rotation de l'arbre 102 et du rotor 103a de la pompe centrifuge 103. Le propergol, impulsé par le rotor 103a, entre dans la pompe 103 par le passage axial d'admission 103b et sort par la volute 103c et la trompette d'échappement 103d.

Deux paliers à roulements 105, 106 soutiennent l'arbre 102 dans le carter 107 de la turbopompe 101. Le premier palier 105 soutient la première extrémité 102a de l'arbre 102, tandis que le deuxième palier 106 soutient la deuxième extrémité 102b de l'arbre 102, de telle manière que la pompe 103 et la turbine 104 sont en porte-à-faux de, respectivement, le premier et le deuxième palier 105, 106.

Afin de lubrifier les paliers 105, 106 et minimiser le frottement entre surfaces solides, un faible débit 108 de propergol liquide sous pression est prélevé à la trompette 103d et réinjecté dans le carter 107 de la turbopompe 101 de manière à noyer les paliers 105, 106 en liquide. Afin de limiter les pertes de propergol liquide vers le conduit axial d'échappement 104e de la turbine 104, un joint d'étanchéité dynamique 109a sépare les paliers 105, 106 de la turbine 104.

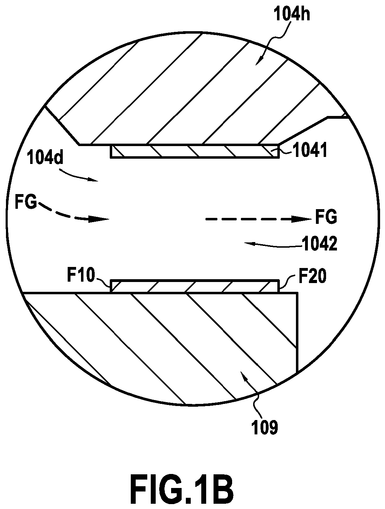

La FIG 1B est une vue du détail IB de la FIG 1A, et représente ainsi plus particulièrement le distributeur 104d.

Le distributeur 104d comprend une portion sensiblement annulaire 1041 présentant une pluralité de canaux 1042, dont un seul est représenté sur la FIG 1B. Chaque canal 1042 débouche sur une première face F10 du distributeur 104d qui est située du côté du tore d'admission 104c, et sur une deuxième face F20 du distributeur 104d qui est située du côté du rotor 104a. Ainsi, les gaz entrant par le conduit radial d'admission 104b entrent dans le tore d'admission 104c, puis traversent le distributeur 104d en passant par les canaux 1042 comme représenté par les flèches FG sur la FIG 1B.

Comme représenté sur les FIG 1A et 1B, le distributeur 104d est une pièce distincte du carter 104h de la turbine 104, et distincte du moyeu 109 recevant le rotor 104a de la turbine 104.

Pour assembler la turbine 104, le distributeur 104d est donc rapporté sur le carter 104h et sur le moyeu 109, typiquement par soudure, les canaux 1042 étant réalisés avant cette opération de soudure. Or les soudures nécessaires pour rapporter le distributeur 104d sont complexes et difficiles à réaliser.

Il existe donc un réel besoin pour un procédé de fabrication d'une turbine comprenant un distributeur du type décrit ci-dessus qui permette une fabrication plus simple et plus rapide. US 2018/079038 A1 divulgue une méthode de fabrication ou de réparation d'un composant de machine rotative.

WO 2016/142631 divulgue une méthode de fabrication de redresseurs par fabrication additive.

### PRÉSENTATION DE L'INVENTION

À cet effet, le présent exposé concerne un procédé de fabrication d'une turbine, la turbine comprenant un distributeur et un carter entourant le distributeur et fabriqué d'un seul tenant avec le distributeur, le distributeur présentant un canal, le canal comprenant une portion amont débouchant sur une face amont du distributeur et une portion aval débouchant sur une face aval du distributeur, le procédé comprenant les étapes de :
- fabrication, par fabrication additive, du distributeur pourvu de ladite portion amont, et du carter d'un seul tenant avec le distributeur, et
- retrait de matière du distributeur ainsi fabriqué, de manière à obtenir ladite portion aval, dans lequel ladite étape de fabrication est effectuée par fusion sur lit de poudres d'alliage métallique, et dans lequel la turbine comprend en outre un moyeu apte à recevoir le rotor de la turbine, et dans lequel, pendant ladite étape de fabrication, au moins une partie du moyeu est fabriquée par fabrication additive d'un seul tenant avec le distributeur.

Dans certains modes de réalisation, ladite étape de retrait de matière comprend un usinage de la face aval du distributeur, en particulier par électroérosion.

La face aval du distributeur est plus aisément accessible pour l'outil d'usinage que sa face amont, tout particulièrement lorsqu'une partie du carter et/ou du moyeu a également été fabriquée pendant l'étape de fabrication.

Dans certains modes de réalisation, ledit usinage est un usinage par électroérosion, lequel est effectué à l'aide d'une électrode comprenant une portion d'électrode de forme complémentaire de ladite portion aval, et, pendant ledit usinage par électroérosion, ladite portion d'électrode pénètre progressivement dans le distributeur en direction de ladite portion amont.

Dans certains modes de réalisation, ladite portion d'électrode pénètre progressivement dans le distributeur jusqu'à pénétrer partiellement dans ladite portion amont.

Ceci permet de maîtriser plus facilement la section du col formé à la jonction entre la partie amont et la partie aval.

Dans certains modes de réalisation, au moins une partie de la portion amont est progressivement rétrécie depuis la face amont du distributeur en allant vers la portion aval.

Dans certains modes de réalisation, la portion amont présente un évasement au niveau de la jonction de la portion amont avec la portion aval, et dans lequel, pendant ledit usinage par électroérosion, ladite portion d'électrode pénètre progressivement dans le distributeur jusqu'à pénétrer dans ledit évasement.

Cet évasement rend possible de permettre une certaine tolérance sur la position de la portion d'électrode par rapport à la portion amont.

Dans certains modes de réalisation, la turbine est une turbine pour turbopompe, en particulier une turbopompe à ergol cryogénique.

### BRÈVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1A est une vue en coupe longitudinale d'une turbopompe de l'état de la technique.
La FIG 1B est une vue du détail IB de la FIG 1A.
La FIG 2 est une vue partielle en coupe longitudinale d'une turbopompe comprenant une turbine conforme au présent exposé.
La FIG 3 est une vue partielle du distributeur de la turbine de la FIG 2, en coupe selon le plan III-III de la FIG 2.
Les FIG 4A à 4E sont des vues analogues à la FIG 3, illustrant la fabrication du distributeur représenté sur la FIG 3.
La FIG 5 est une vue partielle en perspective représentant l'empreinte de la portion amont ainsi que l'électrode, dans leur position représentée sur la FIG 4D.

### DESCRIPTION DÉTAILLÉE DE L'INVENTION

Afin de rendre plus concrète l'invention, des exemples de procédés de fabrication sont décrits en détail ci-après, en référence aux dessins annexés. Il est rappelé que l'invention ne se limite pas à ces exemples. En particulier, bien que ces exemples se rapportent à la fabrication d'une turbine pour turbopompe, ils sont applicables à tout type de turbine comprenant un distributeur.

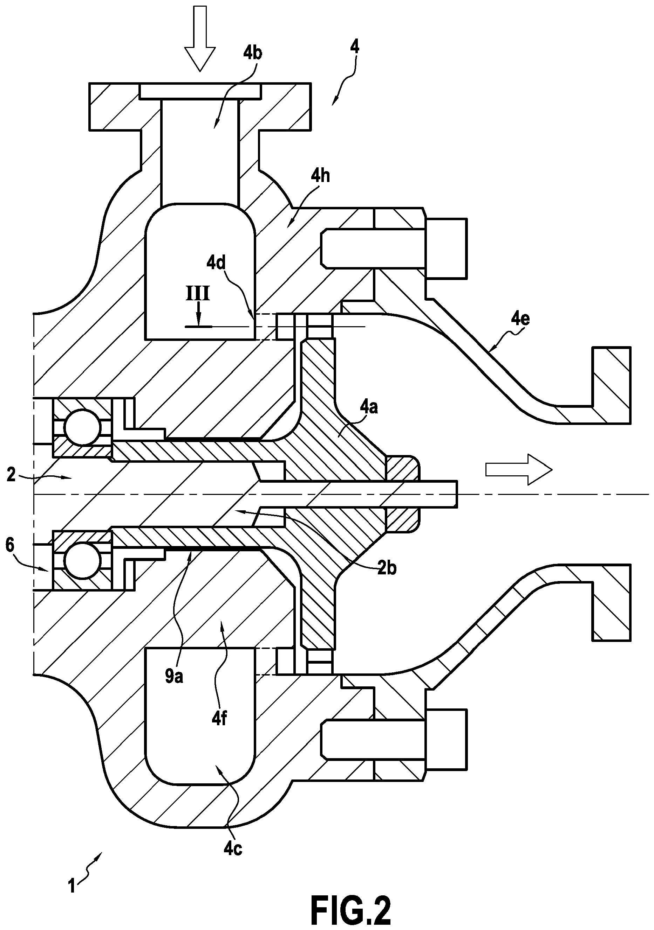

La FIG 2 représente ainsi partiellement, en coupe longitudinale, une turbopompe 1 conforme au présent exposé.

La turbopompe 1 comprend une turbine 4 entraînant une pompe (non représentée). La pompe de la turbopompe 1, et plus généralement tous les éléments de la turbopompe 1 non représentés sur la FIG 2, peuvent être identiques à ceux de la turbopompe 101 de l'état de la technique décrite ci-dessus.

La turbine 4 comprend un rotor 4a, un conduit radial d'admission 4b, un tore d'admission 4c, un distributeur 4d, et un conduit d'échappement 4e.

Le rotor 4a est solidaire d'une extrémité 2b d'un arbre rotatif 2. L'autre extrémité (non représentée) de l'arbre 2 est solidaire d'un rotor (non représenté) de la pompe, l'arbre 2 étant soutenu par au moins un palier 6, qui est par exemple un palier à roulement. Le rotor 4a est reçu, au sein d'un carter 4h de la turbine 4, par un moyeu 4f décrit plus loin. Le moyeu 4f peut être pourvu d'un joint d'étanchéité dynamique 9a séparant le au moins un palier 6 de la turbine 4. Dans la suite, on désigne par « direction axiale » la direction de l'axe de rotation de l'arbre 2, et par « plan axial » tout plan contenant l'axe de rotation de l'arbre 2. En outre, on désigne par « direction radiale » toute direction perpendiculaire à la direction de l'axe de rotation de l'arbre 2. Comme représenté sur la FIG 2, le carter 4h entoure le distributeur 4d.

Le conduit radial d'admission 4b est configuré pour amener des gaz admis dans la turbine 4 vers le tore d'admission 4c, et le tore d'admission 4c est configuré pour amener les gaz sortant du conduit radial d'admission 4b vers le distributeur 4d. Ainsi, la rotation du rotor 4a, propulsé par l'expansion des gaz passés par le conduit radial d'admission 4b, le tore d'admission 4c, et le distributeur 4d, entraîne la rotation de l'arbre 2 et par suite entraîne la pompe. Les gaz sont ensuite expulsés par le conduit d'échappement 4e.

La turbine 4 représentée ici est une turbine axiale, de sorte que le conduit d'échappement 4e est axial, comme représenté sur les FIG. Toutefois, la turbine 4 peut aussi être une turbine radiale, étant entendu que la fabrication du distributeur 4d décrite ci-dessous pour une turbine axiale est également applicable pour une turbine radiale.

La turbopompe 1 peut être une turbopompe à ergol liquide, plus particulièrement une turbopompe à ergol cryogénique comme l'oxygène liquide (LOx) et l'hydrogène liquide (LH₂).

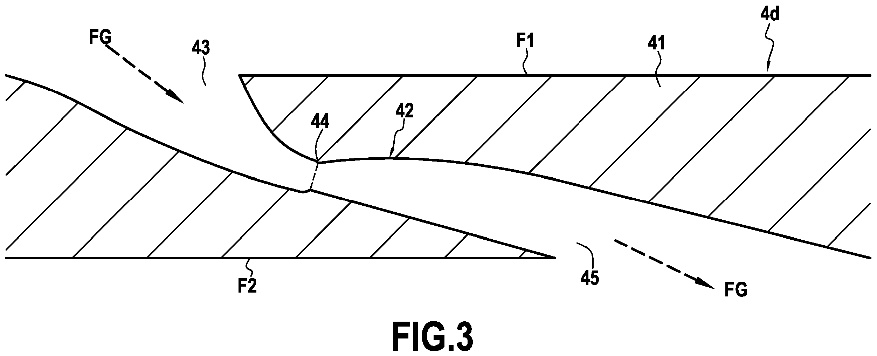

La FIG 3 est une vue partielle du distributeur 4d, en coupe selon le plan III-III de la FIG 2. Le distributeur 4d comprend une portion annulaire ou sensiblement annulaire 41 présentant une pluralité de canaux. Un seul canal 42 de cette pluralité est représenté sur la FIG 3. Dans la suite et par commodité, on ne décrira que ce canal 42, étant entendu que certains ou tous des canaux du distributeur 4d peuvent être similaires à ce canal 42.

Le canal 42 comprend une portion amont 43 et une portion aval 45. Comme représenté sur la FIG 3, la portion amont 43 débouche sur une face amont F1 du distributeur 4d, et la portion aval 45 débouche sur une face aval F2 du distributeur 4d. Au sens du présent exposé, « amont » et « aval » s'entendent par rapport au sens de circulation des gaz (représenté par les flèches FG sur la FIG 3) dans la turbine 4. Ainsi, la face amont F1 est la face du distributeur 4d qui est située du côté du tore d'admission 4c, et la face aval F2 est la face du distributeur 4d qui est située du côté du rotor 4a. Comme mentionné ci-dessus, le carter 4h entoure le distributeur 4d. On comprendra donc que la portion aval 45 débouche en un point de la face aval F2 qui est plus près, dans la direction radiale, de l'arbre 2 que ne l'est le carter 4h. Autrement dit, la portion aval 45 débouche en un point de la face aval F2 qui est radialement à l'intérieur du carter 4h.

Le canal 42 peut présenter une section variable le long de sa longueur. Par exemple, comme représenté sur la FIG 3, au moins une partie de la portion amont 43 peut être progressivement rétrécie depuis la face amont F1 en allant vers la portion aval 45, et/ou au moins une partie de la portion aval 45 peut être progressivement rétrécie depuis la face aval F2 en allant vers la portion amont 43. Lorsque la portion amont 43 et la portion aval 45 sont ainsi progressivement rétrécies, elles peuvent ainsi former ensemble un canal 42 présentant une région de section minimum (aussi dénommée col) 44. En particulier, la portion amont 43 et la portion aval 45 peuvent être progressivement rétrécies de telle sorte que, lorsque la turbine 4 est en fonctionnement, le canal 42 soit supersonique. Il est toutefois possible de donner d'autres formes à la portion amont 43 et/ou à la portion aval 45, sans pour autant sortir du cadre du présent exposé.

Le canal 42 peut être incliné par rapport à la direction axiale, c'est-à-dire que l'entrée de la portion amont 43 sur la face amont F1 peut être plus éloignée de l'axe de rotation de l'arbre 2 que ne l'est la sortie de la portion aval 45 sur la face aval F2, et/ou que l'entrée de la portion amont 43 sur la face amont F1 et la sortie de la portion aval 45 sur la face aval F2 peuvent être contenus dans deux plans axiaux distincts l'un de l'autre.

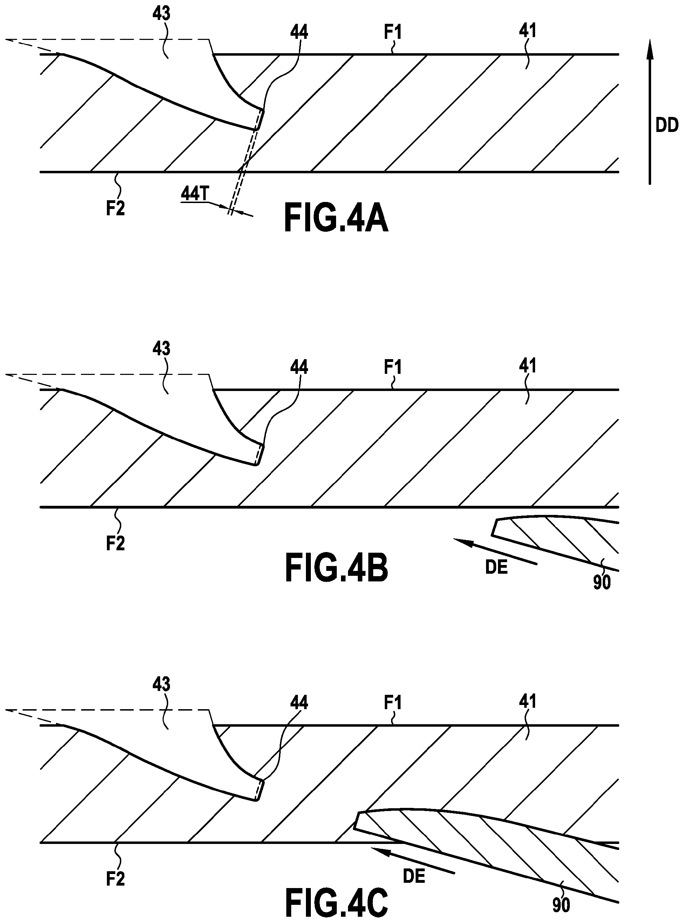

On va maintenant décrire, à l'aide des FIG 4A à 4E, un procédé de fabrication du distributeur 4d et de la turbine 4.

Le procédé comprend une étape de fabrication du distributeur 4d par fabrication additive.

L'étape de fabrication est effectuée par fusion sur lit de poudres. Les méthodes de fabrication additive par fusion sur lit de poudres sont connues en soi. Il peut s'agir par exemple d'une fusion sélective par laser (désignée par les appellations « Selective Laser Melting » (SLM), « Direct Metal Laser Sintering » (DLMS), et « Layer Beam Melting » (LBM) en anglais), d'une fusion par faisceau d'électrons (« Electron Beam Melting » (EBM) en anglais), ou encore de méthodes dérivées. Par exemple, l'étape de fabrication peut être effectuée par fusion sur lit de poudres d'un unique alliage métallique. L'alliage métallique est typiquement un alliage apte à résister aux contraintes subies par la turbine 4 pendant son fonctionnement, par exemple un alliage à base de titane (Ti) ou un alliage à base de nickel (Ni).

La FIG 4A représente le distributeur 4d à l'issue de l'étape de fabrication. À l'issue de cette étape de fabrication, le distributeur 4d est pourvu de la portion amont 43 du canal 42, la portion aval 45 n'étant quant à elle pas encore réalisée. Sur la FIG 4A, la flèche DD représente le sens de dépôt des couches de poudre successives lorsque l'étape de fabrication est effectuée par fusion sur lit de poudres.

En outre, pendant l'étape de fabrication, le carter 4h et au moins une partie du moyeu 4f (non représentées sur les FIG 4A à 4E) sont fabriqués par fabrication additive d'un seul tenant avec le distributeur 4d. Ainsi, à l'issue du procédé de fabrication, le distributeur 4d peut être réalisé d'un seul tenant avec le carter 4h et le moyeu 4f comme représenté sur la FIG 2.

Le procédé de fabrication comprend en outre une étape de retrait de matière du distributeur 4d ainsi fabriqué, de manière à obtenir la portion aval 45 et donc le canal 42 complet.

Par « étape de retrait de matière », on entend toute étape à l'issue de laquelle la matière du distributeur 4d située à l'emplacement souhaité de la portion aval 45 est retirée, formant ainsi la portion aval 45. L'étape de retrait de matière peut ainsi comprendre une ou plusieurs étapes d'usinage. Ces étapes d'usinage peuvent être effectuées selon une ou plusieurs méthodes d'usinage différentes. Les méthodes d'usinage peuvent notamment être des méthodes d'usinage mécanique classique, l'usinage électrochimique (« Electrochemical Machining » ou ECM en anglais) ou l'usinage par électroérosion (« Electrical Discharge Machining » ou EDM en anglais).

En tout état de cause, à l'issue de l'étape de retrait de matière, la portion aval 45 est réalisée et est en communication fluide avec la portion amont 43, conduisant ainsi au canal 42 complet.

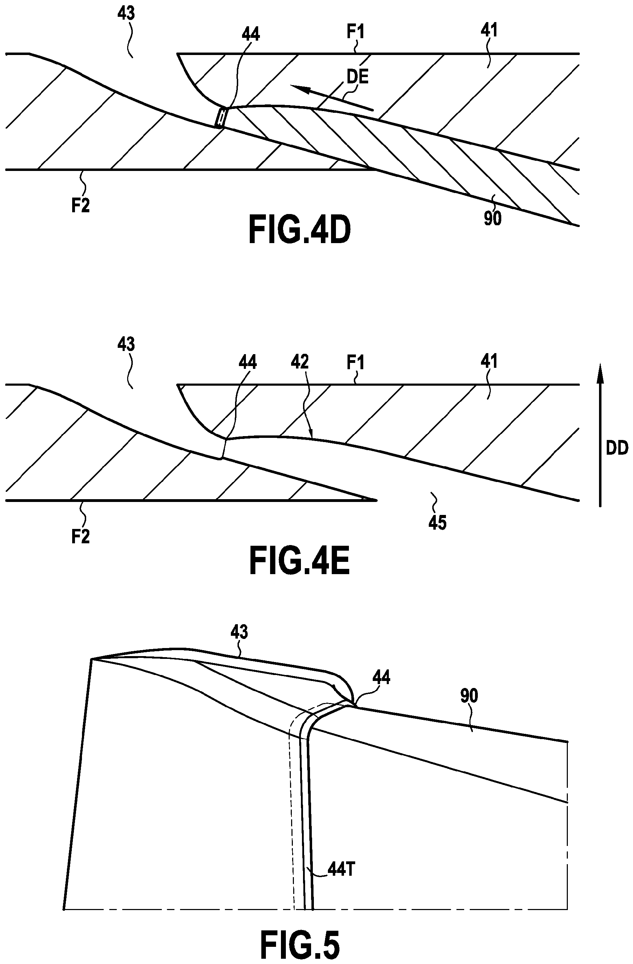

Après l'étape de retrait de matière, le procédé de fabrication peut éventuellement comprendre une deuxième étape de fabrication par fabrication additive, dans laquelle on fabrique les parties du moyeu 4f qui n'ont pas été encore été fabriquées. Cette deuxième étape de fabrication peut être effectuée l'aide des mêmes méthodes que l'étape de fabrication décrite ci-dessus, et n'est donc pas décrite en détail à nouveau. En particulier, cette deuxième étape de fabrication peut être effectuée par fusion sur lit de poudres, les couches successives de poudre étant déposées dans le sens indiqué par la flèche DD sur les FIG 4A et 4E.

En tout état de cause, à l'issue de l'étape de retrait de matière éventuellement suivie de la deuxième étape de fabrication additive, le distributeur 4d et la turbine 4 sont fabriqués, et, comme mentionné ci-dessus, la portion aval 45 débouche en un point de la face aval F2 qui est radialement à l'intérieur du carter 4h.

L'étape de retrait de matière peut comprendre un usinage de la face aval F2 du distributeur 4d. La face aval F2 est plus aisément accessible pour l'outil d'usinage que la face amont F1, tout particulièrement lorsque le carter 4h et au moins une partie du moyeu 4f a été fabriquée pendant l'étape de fabrication.

En particulier, l'usinage est un usinage par électroérosion. Les méthodes d'usinage par électroérosion sont connues en soi et ne sont pas décrites en détail ici.

On va maintenant décrire, à l'aide des FIG 4B à 4D, un exemple d'usinage par électroérosion de la face aval F2 permettant d'obtenir aisément la portion aval 45. Dans cet exemple, l'électrode d'électroérosion (simplement appelée « l'électrode » dans la suite) comprend une portion d'électrode 90 destinée à venir en regard du distributeur 4d fabriqué, et apte à provoquer l'érosion de celui-ci. Comme représenté sur les FIG 4B à 4D, la portion d'électrode 90 présente une forme complémentaire ou sensiblement complémentaire de celle de la portion aval 45. En variante, la portion d'électrode 90 peut être de dimensions très légèrement réduites par rapport à celles de la portion aval 45, par exemple parce que la portion d'électrode 90 présente une forme obtenue par homothétie de la forme de portion aval 45.

Comme représenté sur la FIG 4B, la portion d'électrode 90 est tout d'abord amenée en regard de la face aval F2, et commence à éroder le distributeur 4d.

Ensuite, comme représenté sur la FIG 4C, la portion d'électrode 90 pénètre progressivement dans le distributeur 4d en direction de la portion amont 43, tout en continuant à retirer de la matière du distributeur 4d. La direction DE de pénétration de la portion d'électrode 90 est représentée sur les FIG 4B à 4D. Un balançage du distributeur 4d est typiquement réalisé afin de permettre à la portion d'électrode 90 de pénétrer de la façon désirée dans le distributeur 4d. En outre, des repères (non représentés) peuvent être prévus sur la face aval F2 du distributeur 4d pour guider la pénétration de la portion d'électrode 90 et ainsi encore améliorer la précision de cette pénétration.

Ensuite, comme représenté sur la FIG 4D, l'extrémité de la portion d'électrode 90 arrive au voisinage de la portion amont 43. Grâce au fait que la portion d'électrode présente une forme complémentaire de celle de la portion aval 45, on obtient ainsi la portion aval 45 après retrait de la portion d'électrode 90 comme représenté sur la FIG 4E.

On remarquera que grâce au fait que la portion amont 43 soit réalisée pendant l'étape de fabrication par fabrication additive et que la portion aval 45 soit ensuite réalisée par usinage de la face aval F2 comme cela vient d'être décrit, il n'est pas nécessaire de prévoir des supportages sur le distributeur 4d du côté de la face aval F2 comme cela serait le cas si l'intégralité du canal 42 était réalisé pendant l'étape de fabrication par fabrication additive. Ceci est avantageux du point de vue économique et industriel, car l'opération de retrait de tels supportages est difficile à réaliser de manière complètement automatisée, et doit donc souvent être terminée manuellement, ce qui engendre des dispersions de fabrication importantes.

La portion d'électrode 90 peut pénétrer progressivement dans le distributeur 4d jusqu'à ce que son extrémité parvienne à une très petite distance de la portion amont 43, par exemple à quelques dixièmes de millimètres, l'électroérosion au voisinage de ladite extrémité réalisant alors le col 44. Il est toutefois préférable que, comme représenté sur la FIG 4D, la portion d'électrode 90 pénètre progressivement dans le distributeur 4d jusqu'à pénétrer partiellement dans la portion amont 43. La section de l'extrémité de la portion d'électrode 90 détermine alors directement la section du col 44. Ceci permet de maîtriser plus facilement la section du col 44, ce qui est particulièrement avantageux dans le cas où le canal 42 est supersonique, car dans un tel canal supersonique, la section du col détermine directement en grande partie les performances hydrodynamiques du canal.

Comme représenté sur les FIG 4A et 5, la portion amont 43 peut en outre présenter un évasement 44T au niveau de la jonction de la portion amont 43 avec la portion aval 45. Comme représenté en perspective sur la FIG 5, l'évasement 44T tend à augmenter localement la section de la portion amont 43 au niveau de cette jonction. Ainsi, il est possible de permettre une certaine tolérance sur la position de la portion d'électrode 90 par rapport à la portion amont 43, tout en garantissant que le col 44 obtenu après retrait de la portion d'électrode 90 présente néanmoins la section souhaitée.

Dans ce qui précède, on a décrit la fabrication d'un distributeur 4d présentant un seul canal 42. Le distributeur 4d présente toutefois typiquement une pluralité de canaux 42, lesquels peuvent être tous identiques et/ou être régulièrement espacés sur la circonférence de la partie annulaire 41. Dans ce cas, dans l'étape de fabrication, on fabrique par fabrication additive le distributeur 4d muni des portions amont 43 de chaque canal 42. Ensuite, on réalise dans le distributeur 4d ainsi fabriqué chacune des portions aval 45 correspondant à chacune des portions amont 43, par exemple par usinage par électroérosion de la face aval F2 du distributeur 42 comme décrit précédemment.

Comme mentionné plus haut, le carter 4h est fabriqué d'un seul tenant avec le distributeur 4d pendant l'étape de fabrication. Typiquement, le carter fabriqué d'un seul tenant avec le distributeur 4d entoure la face amont F1, de sorte que cette face amont F1 est peu, voire pas accessible pour un outil d'usinage destiné à réaliser le ou les canaux 42. On comprendra que dans ce cas, le procédé de fabrication ci-dessus présente un intérêt tout particulier puisqu'il permet de réaliser le distributeur 4d complet, d'un seul tenant avec le carter 4h et muni de son ou ses canaux 42, par une étape de fabrication additive suivie d'une étape de retrait de matière agissant sur la face aval F2, cette face aval F2 étant plus accessible pour un outil d'usinage que la face amont F1.

Une fois que la fabrication décrite ci-dessus du distributeur 4d est terminée, on peut continuer la fabrication de la turbine 4. Notamment, on peut installer le joint d'étanchéité dynamique 9a et le rotor 4a sur le moyeu 4f, puis on peut fixer le conduit axial d'échappement 4e au carter 4h, par exemple à l'aide d'éléments de fixation comme représenté schématiquement sur la FIG 2.

Enfin, une fois que la fabrication de la turbine 4 est terminée, on peut poursuivre la fabrication de la turbopompe 1 comme cela est connu.

Comme on l'a déjà mentionné ci-dessus, le procédé de fabrication décrit est applicable à tout type de turbine, et en particulier à une turbine pour turbopompe.

## Revendications

1. Procédé de fabrication d'une turbine (4), la turbine comprenant un distributeur (4d) et un carter (4h) entourant le distributeur (4d) et fabriqué d'un seul tenant avec le distributeur (4d), le distributeur (4d) présentant un canal (42), le canal comprenant une portion amont (43) débouchant sur une face amont (F1) du distributeur (4d) et une portion aval (45) débouchant sur une face aval (F2) du distributeur (4d), **caractérisé en ce que** le procédé comprend les étapes de :
- fabrication, par fabrication additive, du distributeur (4d) pourvu de ladite portion amont (43) et du carter (4h) d'un seul tenant avec le distributeur (4d),
- retrait de matière du distributeur (4d) ainsi fabriqué, de manière à obtenir ladite portion aval (45),
dans lequel ladite étape de fabrication est effectuée par fusion sur lit de poudres d'alliage métallique, et
dans lequel la turbine (4) comprend en outre un moyeu (4f) apte à recevoir le rotor (4a) de la turbine (4), et dans lequel, pendant ladite étape de fabrication, au moins une partie du moyeu (4f) est fabriquée par fabrication additive d'un seul tenant avec le distributeur (4d).

2. Procédé selon la revendication 1, dans lequel ladite étape de retrait de matière comprend un usinage de la face aval (F2) du distributeur (4d), en particulier par électroérosion.

3. Procédé selon la revendication 2, dans lequel ledit usinage est un usinage par électroérosion, lequel est effectué à l'aide d'une électrode comprenant une portion d'électrode (90) de forme complémentaire de ladite portion aval (45), et dans lequel, pendant ledit usinage par électroérosion, ladite portion d'électrode (90) pénètre progressivement dans le distributeur (4d) en direction de ladite portion amont (43).

4. Procédé selon la revendication 3, dans lequel, pendant ledit usinage par électroérosion, ladite portion d'électrode (90) pénètre progressivement dans le distributeur (4d) jusqu'à pénétrer partiellement dans ladite portion amont (43).

5. Procédé selon la revendication 4, dans lequel au moins une partie de la portion amont (43) est progressivement rétrécie depuis la face amont (F1) du distributeur (4d) en allant vers la portion aval (45).

6. Procédé selon la revendication 4 ou 5, dans lequel la portion amont (43) présente un évasement (44T) au niveau de la jonction de la portion amont (43) avec la portion aval (45), et dans lequel, pendant ledit usinage par électroérosion, ladite portion d'électrode (90) pénètre progressivement dans le distributeur (4d) jusqu'à pénétrer dans ledit évasement (44T).

7. Procédé selon l'une quelconque des revendications 1 à 6, dans lequel la turbine (4) est une turbine pour turbopompe (1), en particulier une turbopompe à ergol cryogénique.

## Patentansprüche

1. Verfahren zum Herstellen einer Turbine (4), wobei die Turbine ein Leitrad (4d) sowie ein Gehäuse (4h) umfasst, welches das Leitrad (4d) umgibt und mit dem Leitrad (4d) einstückig hergestellt ist, wobei das Leitrad (4d) einen Kanal (42) aufweist, wobei der Kanal einen stromaufwärtigen Abschnitt (43), der auf einer stromaufwärtigen Seite (F1) des Leitrades (4d) ausmündet, sowie einen stromabwärtigen Abschnitt (45), der auf einer stromabwärtigen Seite (F2) des Leitrades (4d) ausmündet, umfasst, **dadurch gekennzeichnet, dass** das Verfahren die Schritte umfasst des:
- Herstellens des Leitrades (4d), das mit dem stromaufwärtigen Abschnitt (43) versehen ist, und des Gehäuses (4h) aus einem Stück mit dem Leitrad (4d), mittels additiver Fertigung,
- Entfernens von Material aus dem so hergestellten Leitrad (4d), um den stromabwärtigen Abschnitt (45) zu erhalten,
- wobei der Herstellungsschritt durch Schmelzen auf einem Bett aus Metalllegierungspulvern durchgeführt wird, und
wobei die Turbine (4) ferner eine Nabe (4f) umfasst, die geeignet ist, den Rotor (4a) der Turbine (4) aufzunehmen, und wobei während des Herstellungsschrittes wenigstens ein Teil der Nabe (4f) durch additive Fertigung aus einem Stück mit dem Leitrad (4d) hergestellt wird.

2. Verfahren nach Anspruch 1, bei dem der Schritt des Entfernens von Material eine Bearbeitung der stromabwärtigen Seite (F2) des Leitrades (4d) umfasst, insbesondere durch Elektroerosion.

3. Verfahren nach Anspruch 2, bei dem die Bearbeitung eine Bearbeitung mittels Elektroerosion ist, welche mit Hilfe einer Elektrode durchgeführt wird, die einen Elektrodenabschnitt (90) mit einer zu dem stromabwärtigen Abschnitt (45) komplementären Form umfasst, und bei dem während der Bearbeitung mittels Elektroerosion der Elektrodenabschnitt (90) in Richtung des stromaufwärtigen Abschnitts (43) schrittweise in das Leitrad (4d) eindringt.

4. Verfahren nach Anspruch 3, bei dem während der Bearbeitung mittels Elektroerosion der Elektrodenabschnitt (90) schrittweise in das Leitrad (4d) eindringt, bis er teilweise in den stromaufwärtigen Abschnitt (43) eindringt.

5. Verfahren nach Anspruch 4, bei dem wenigstens ein Teil des stromaufwärtigen Abschnitts (43) von der stromaufwärtigen Seite (F1) des Leitrades (4d) aus in Richtung des stromabwärtigen Abschnitts (45) schrittweise verjüngt ist.

6. Verfahren nach Anspruch 4 oder 5, bei dem der stromaufwärtige Abschnitt (43) eine Erweiterung (44T) im Bereich der Verbindung des stromaufwärtigen Abschnitts (43) mit dem stromabwärtigen Abschnitt (45) aufweist, und bei dem während der Bearbeitung mittels Elektroerosion der Elektrodenabschnitt (90) schrittweise in das Leitrad (4d) eindringt, bis er in die Erweiterung (44T) eindringt.

7. Verfahren nach einem der Ansprüche 1 bis 6, bei dem die Turbine (4) eine Turbine für eine Turbopumpe (1), insbesondere eine Turbopumpe mit kryogenem Treibstoff ist.

## Claims

1. A method for manufacturing a turbine (4), the turbine comprising a distributor (4d) and a casing (4h) surrounding the distributor (4d) and manufactured in one piece with the distributor (4d), the distributor (4d) having a channel (42), the channel comprising an upstream portion (43) opening onto an upstream face (F1) of the distributor (4d) and a downstream portion (45) opening onto a downstream face (F2) of the distributor (4d), **characterized in that** the method comprises the steps of:
- manufacturing, by additive manufacturing, the distributor (4d) provided with said upstream portion (43) and the casing (4h) in one piece with the distributor (4d),
- removing material from the thus manufactured distributor (4d) so as to obtain said downstream portion (45),
wherein said manufacturing step is carried out by powder bed melting of a metal alloy, and
wherein the turbine (4) further comprises a hub (4f) able to receive the rotor (4a) of the turbine (4), and wherein, during said manufacturing step, at least part of the hub (4f) is manufactured by additive manufacturing in one piece with the distributor (4d).

2. The method according to claim 1, wherein said material removal step comprises a machining of the downstream face (F2) of the distributor (4d), particularly by electrical discharge.

3. The method according to claim 2, wherein said machining is an electrical discharge machining, which is performed using an electrode comprising an electrode portion (90) of a shape complementary to said downstream portion (45), and wherein, during said electrical discharge machining, said electrode portion (90) gradually enters the distributor (4d) towards said upstream portion (43).

4. The method according to claim 3, wherein, during said electrical discharge machining, said electrode portion (90) gradually enters the distributor (4d) until partially entering said upstream portion (43).

5. The method according to claim 4, wherein at least part of the upstream portion (43) is gradually narrowed from the upstream face (F1) of the distributor (4d) towards the downstream portion (45).

6. The method according to claim 4 or 5, wherein the upstream portion (43) has a flare (44T) at the junction of the upstream portion (43) with the downstream portion (45), and wherein, during said electrical discharge machining, said electrode portion (90) gradually enters the distributor (4d) until entering said flare (44T).

7. The method according to any one of claims 1 to 6, wherein the turbine (4) is a turbine for a turbopump (1), particularly a cryogenic propellant turbopump.
